# EUROPEAN PATENT APPLICATION

(11) **EP 4 810 276 A1**
(43) Date of publication of application: **23.09.2026**
(21) Application number: 26156937.0
(22) Date of filing: 06.02.2026
(51) Int. Cl.: B60G 17/016, A01M 7/00, B60G 17/0165

(54) **ACTIVE SUSPENSION CONTROL IN AGRICULTURAL SPRAYERS**

(30) Priority: 20.03.2025 US 202563775016 P; 13.01.2026 US 202619447218
(71) Applicant: Deere & Company, Moline, IL 61265 (US); Iowa State University Research Foundation, Inc., Ames, IA 50011 (US)
(72) Inventor: COOK, Jeffrey M, Waterloo (US); ALDERS, Dirk, Overloon (NL); ANDERSON, Jack C, Madrid (US); SCHULTES, Jacob J, Urbandale (US); HUERTA-MUSIL, Joel, Ames (US); DRIEST, Marco, Ames (US); ADAMS, Bailey J, Ames (US)
(74) Representative: Reddie & Grose LLP

(57) **Abstract**

Systems, apparatus, articles of manufacture, and methods for active suspension control in agricultural sprayers are disclosed. An example agricultural sprayer includes a chassis; a wheel coupled to the chassis; an active damper at a location of the chassis; and programmable circuitry to execute machine-readable instructions to: identify motion of the chassis at the location; determine a damping force command for the active damper based on the motion; cause the active damper to implement a damping force at the location of the chassis based on the damping force command, the damping force to alter dynamics of the chassis at the location.

## Description

### RELATED APPLICATION

This patent claims the benefit of U.S. Provisional Patent Application No. 63/775,016, which was filed on March 20, 2025. U.S. Provisional Patent Application No. 63/775,016 is hereby incorporated herein by reference in its entirety. Priority to U.S. Provisional Patent Application No. 63/775,016 is hereby claimed.

### FIELD OF THE DISCLOSURE

This disclosure relates generally to vehicle suspensions and, more particularly, to active suspension control in agricultural sprayers.

### BACKGROUND

Suspension systems for vehicles such as agricultural equipment are passive in nature and are designed to level out the chassis around a nominal height based on a vehicle weight.

### SUMMARY

Systems, apparatus, articles of manufacture, and methods are disclosed for active suspension control in agricultural sprayers. An example agricultural sprayer includes: a chassis; a wheel coupled to the chassis; an active damper at a location of the chassis; machine-readable instructions; and programmable circuitry to execute the machine-readable instructions to: identify motion of the chassis at the location; determine a damping force command for the active damper based on the motion; and cause the active damper to implement a damping force at the location of the chassis based on the damping force command, the damping force to alter dynamics of the chassis at the location.

In one example, the wheel is a first wheel, the active damper is a first active damper, the location is a first location, the motion is a first motion, the damping force command is a first damping force command, the damping force is a first damping force, and the agricultural sprayer includes: a second wheel coupled to the chassis; and a second active damper at a second location of the chassis; and the programmable circuitry is to execute the machine-readable instructions to: identify second motion of the chassis at the second location; determine a second damping force command for the second active damper based on the second motion; and cause the second active damper to implement a second damping force at the second location of the chassis based on the second damping force command, the second damping force to alter dynamics of the chassis at the second location, the second damping force different than the first damping force.

In another example, the programmable circuitry is to execute the machine-readable instructions to cause the first active damper to implement the first damping force and the second active damper to implement the second damping force independently.

In another example, the first active damper and the second active damper include hydraulic dampers, the first force is proportional to the first motion and the second force is proportional to the second motion.

In another example, the programmable circuitry is to execute the machine-readable instructions to: detect a vehicle speed; compare the vehicle speed to a threshold speed; and determine the damping force when the vehicle speed satisfies the threshold speed.

In another example, the programmable circuitry is to execute the machine-readable instructions to: identify an operator comfort setting; and determine the damping force based on the operator comfort setting.

In another example, the agricultural sprayer includes a boom, and the programmable circuitry is to execute the machine-readable instructions to: identify a position of the boom; and determine the damping force based on the position of the boom.

In another example, the agricultural sprayer includes a tank with a volume of liquid, and the programmable circuitry is to execute the machine-readable instructions to: identify sloshing of the volume of the liquid; and determine the damping force based on the sloshing.

In another example, the damping force command is to compress the first active damper and to extend the second active damper.

An example non-transitory machine-readable storage medium includes instructions that, when executed, cause at least one processor circuit to: access data related to motion of a chassis of an agricultural sprayer; determine a damping force command for an active damper based on motion at a location of the chassis; and cause the active damper to implement a damping force at the location of the chassis based on the damping force command, the damping force to alter dynamics of the chassis at the location.

In one example, the wheel is a first wheel, the active damper is a first active damper, the location is a first location, the motion is a first motion, the damping force command is a first damping force command, the damping force is a first damping force, and the instructions, when executed, cause the at least one processor circuit to: identify second motion of the chassis at a second location; determine a second damping force command for a second active damper based on the second motion; and cause the second active damper to implement a second damping force at the second location of the chassis based on the second damping force command, the second damping force to alter dynamics of the chassis at the second location, the second damping force different than the first damping force, the first damping force and the second damping force implemented independently.

In another example, the active damper includes hydraulic dampers, the force being proportional to the motion.

In another example, the instructions, when executed, cause the at least one processor circuit to actuate a valve in the active damper in response to the damping force command.

In another example, the instructions, when executed, cause the at least one processor circuit to: compare a vehicle speed to a threshold speed; and determine the damping force when the vehicle speed satisfies the threshold speed.

In another example, the instructions, when executed, cause the at least one processor circuit to determine the damping force based on an operator comfort setting.

In another example, the instructions, when executed, cause the at least one processor circuit to determine the damping force based on a position of a boom.

In another example, the instructions, when executed, cause the at least one processor circuit to determine the damping force based on a sloshing of a volume of liquid in a tank.

In another example, the active damper includes a first active damper and a second active damper, and the instructions, when executed, cause the at least one processor circuit to cause compression the first active damper and to cause extension of the second active damper based on the first damping force command.

An example method to stabilize a chassis of an agricultural sprayer includes identifying motion of the chassis at a location; determining a damping force command for an active damper based on the motion; and causing the active damper to implement a damping force at the location of the chassis based on the damping force command, the damping force to alter dynamics of the chassis at the location.

In one example, the wheel is a first wheel, the active damper is a first active damper, the location is a first location, the motion is a first motion, the damping force command is a first damping force command, the damping force is a first damping force, and the method includes: identifying second motion of the chassis at a second location; determining a second damping force command for a second active damper based on the second motion; and causing the second active damper to implement a second damping force at the second location of the chassis based on the second damping force command, the second damping force to alter dynamics of the chassis at the second location, the second damping force different than the first damping force, the first damping force and the second damping force implemented independently.

Example machine-readable storage includes machine-readable instructions, that when executed, implement a method or realize an apparatus as recited in any preceding example.

### BRIEF DESCRIPTION OF THE DRAWINGS

FIG. 1 illustrates an example agricultural sprayer including a tractor and a sprayer implement.
FIG. 2 illustrates an example tractor of the agricultural sprayer of FIG. 1 including an example active suspension control system and without the sprayer implement shown.
FIG. 3 is a block diagram of an example implementation of suspension control circuitry of the active suspension control system of FIG. 2.
FIG. 4 is a flowchart representative of example machine-readable instructions and/or example operations that may be executed, instantiated, and/or performed by example programmable circuitry to implement the suspension control circuitry of FIG. 3.
FIG. 5 is a block diagram of an example processing platform including programmable circuitry structured to execute, instantiate, and/or perform the example machine-readable instructions and/or perform the example operations of FIG. 4 to implement the suspension control circuitry of FIG. 3.

In general, the same reference numbers will be used throughout the drawing(s) and accompanying written description to refer to the same or like parts. The figures are not necessarily to scale.

### DETAILED DESCRIPTION

Heavy equipment or work vehicles such as off-road vehicles, agricultural vehicles, construction vehicles, and road maintenance vehicles include suspension control to cushion or damp movement of the chassis of the vehicle. Example work vehicles include tractors, combine harvesters, forage harvesters, sugarcane harvesters, seed drills, field sprayers, loaders, telescopic handlers, backhoes, excavators, graders, feller bunchers, forwarders, log loaders, skidders, dump trucks, cranes, etc. Chassis movement can be caused by traversal of the vehicle across terrain (e.g., a field) and by operation of the work vehicle or an attachment or implement connected to the work vehicle. Example work vehicle implements include seeders, spreaders, round balers, sprayers, tillage, headers for combine harvesters, windrower headers, buckets, sweepers, rollers, blades, jackhammers, booms, etc.

A chassis of a work vehicle, such as an agricultural sprayer, experiences changes of mass at locations such as corners of the chassis, referred to herein as corner mass, during deployment, or unfolding, of a sprayer boom and with movement of a volume of liquid in a tank. The change in mass causes the chassis to rock or otherwise move. Excessive chassis movement can jostle an operator in a cab of the vehicle and may compromise performance of the work vehicle for its intended purpose. Operator discomfort and compromised vehicle performance can limit the duration the work vehicle can operate. Compromised vehicle performance can cause damage to the vehicle or the implement and/or negatively affect the performance of the implement such as spray quality.

Some vehicle chassis suspension controls mechanically adjust hydraulic cylinder pressures or air spring pressure to re-level the chassis and compensate for movement caused by changes to corner mass. However, known systems typically include a mechanical spring having a single acting spring rate or force curve. Examples disclosed herein improve known systems and can handle rapidly adjusting forces during in-field dynamic conditions to actively control unwanted chassis suspension dynamics and overall vehicle instability.

Examples disclosed herein actively and independently control suspension systems at different locations of a chassis of a work vehicle. For example, variable hydraulic damper components are actively controlled to apply a variable force on respective independent corner chassis suspension systems of a work vehicle such as an agricultural sprayer with boom platforms. Examples disclosed herein incorporate mechanical and/or hydraulic active damping components, sensors, programmable controllers, and logic to intelligently change the damping force of the dampers as a function of dynamic, in-field conditions and operating states of the work vehicle and/or implements connected to the work vehicle.

Examples disclosed herein enable a continuous and rapid change of damping force imparted on the chassis suspension system. The damping force can be optimized based on normal in-field conditions, fluctuating in-field conditions, and/or operating conditions that pose instability challenges for the work vehicle and implements connected to the work vehicle.

Examples disclosed herein control suspension to reduce work vehicle in-cab accelerations and provide improved operator comfort and health. Improved operator comfort reduces operator fatigue, which enables increased daily operating hours. In the context of an agricultural sprayer, increased operating hours are particularly beneficial during peak, busy seasons when products are applied to fields.

Examples disclosed herein control suspension to increase work vehicle stability. Smoother chassis suspension dynamics improve overall vehicle ride characteristics and help stabilize vehicles. In the context of an agricultural sprayer, substantial sloshing of liquid can occur in the solution tank, which shakes the work vehicle. The example suspension controls systems disclosed herein mitigate the shaking.

Examples disclosed herein control suspension to aid control over implements. For example, considering an agricultural sprayer, improvements in control of the vehicle suspension decrease the likelihood that unwanted disturbances or other chassis movements are propagated to and affect the boom platform on the back end of the work vehicle. Thus, examples disclosed herein enhance control over boom height and increase boom height stability. A stable boom improves the effectiveness of an agricultural sprayer including, for example, at higher application speeds.

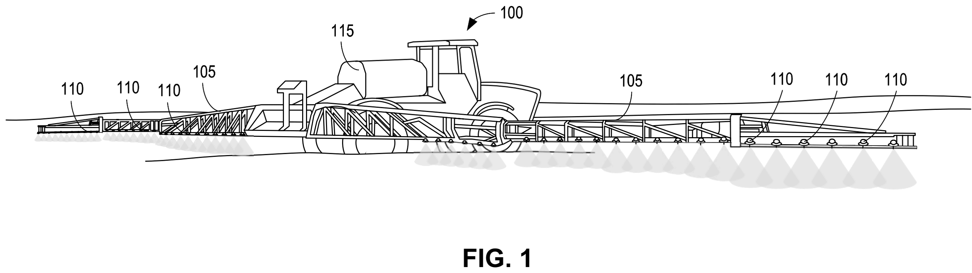

FIG. 1 illustrates an example vehicle 100 and example implement 105. In this example, the vehicle 100 is an agricultural sprayer. In this example, the implement 105 is a sprayer boom. Though an agricultural sprayer is illustrated in FIG. 1 and discussed throughout this disclosure, the suspension controls disclosed herein are applicable to all work vehicle types.

Agricultural sprayers are used to apply a spray of a liquid (e.g., fertilizer, fungicides, and/or other products) to a field using nozzles 110 mounted on the boom 105. The booms 105 on many agricultural sprayers 100 have dynamics of a flexible beam and are susceptible to vibration or other undesired movements.

To spray the liquid, the agricultural sprayer 100 includes a pump that pumps the liquid from a reservoir or tank 115 to nozzles 110 mounted on the boom 105. The spray is controlled to deliver a target application to the agricultural field. For example, the liquid can be delivered to a particular dispersal area, such as directly on a crop or weed, in between plants, etc. The liquid can be delivered at a specified rate so that a target quantity of the liquid is applied to the dispersal area. Deviations from a prescribed application of the liquid can result in the liquid being applied to unintended areas and/or in incorrect amounts. For example, unevenly applied fertilizer is wasted in areas of over-application, and ineffective in areas of under-application.

In the illustrated example, the axis of the boom 105 is perpendicular to the direction of travel of the agricultural sprayer 100 across the field. As the agricultural sprayer 100 traverses across the field, disturbances such as changes in wheel height due to ground level changes, impact with objects such as rocks, tree roots, etc., and/or wind can cause the boom 105 to vibrate. Boom vibration affects the boom position and orientation, and adversely affects the spraying performance. Changes in boom position and orientation changes the vertical position of the nozzles 110, and the distance of the nozzles 110 to the dispersal area in the field. In addition, when turning the agricultural sprayer 100, centrifugal force can cause movement of the boom 105, and thus the nozzles 110 mounted on the boom 105. Changes in the chassis height and turning of the agricultural sprayer 100 can also cause sloshing of a volume of liquid in the tank 115. Sloshing liquid can also affect the boom position and orientation.

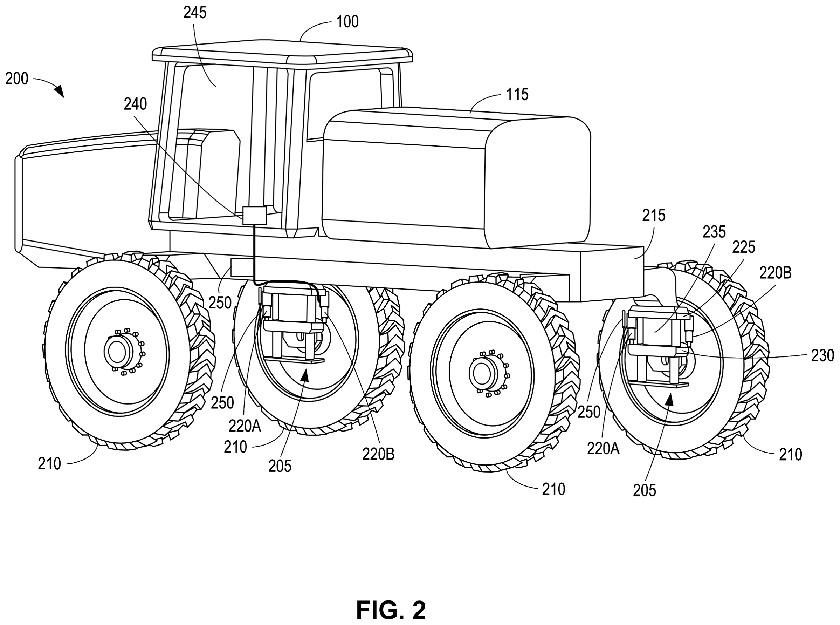

Suspension controls are used to mitigate vibration in the boom 105 and sloshing of liquid in the tank 115. FIG. 2 illustrates an example tractor or work vehicle 200 for the agricultural sprayer 100 of FIG. 1 with an example active suspension control system 205. The boom 105 is not shown in FIG. 2 for clarity. The work vehicle 200 has four wheels 210. In the illustrated example, there are elements of the active suspension control system 205 at each of the wheels 210, as described below. Thus, there are elements of the active suspension control system 205 at different locations (e.g., corners) of a chassis 215. Active suspension control systems are suspension and damping systems that cushion or damp movement between a first part (e.g., the chassis 215) and a second part (e.g., a wheel 210) of the work vehicle 200. The work vehicle 200 of the example of FIG. 2 has four wheels. The suspension controls disclosed herein may be used with vehicles with other drive forms including, for example, three wheeled vehicles, tracked systems, etc.

The active suspension control system 205 includes an example first active damper 220A and an example second active damper 220B. In some examples, the first active damper 220A and the second active damper 220B includes a hydraulic damper. The first active damper 220A and the second active damper 220B are coupled between a sprung mass 225 (e.g., an axle knee casting or axle knee weldment coupled to the chassis 215) and an unsprung mass 230 (e.g., a wheel motor casting coupled to the wheel 210). In some examples, the active suspension control system 205 includes one of the first active damper 220A or the second active damper 220B. In some examples, the work vehicle 200 includes an example air spring 235. In the illustrated example, the air spring 235 is positioned between the first active damper 220A and the second active damper 220B. The air spring 235 is incorporated in a mechanical leveling valve system that assists in suspension control and stabilization of the chassis 215.

The work vehicle 200 includes an example electronic controller 240. In the illustrated example, the electronic controller 240 is positioned in a cab 245 of the work vehicle 200 for access by an operator. The electronic controller 240 can include input interfaces (e.g., keys, dials, buttons, switches, a touch screen, a microphone, etc.) for an operator to provide information and/or commands. The electronic controller 240 also includes an output interface (e.g., a display, speakers, etc.) to provide information to the operator. The electronic controller 240 is coupled to the first active damper 220 and the second active damper 220B. In some examples, the electronic controller 240 is part of the active suspension control system 205.

The work vehicle 200 includes a plurality of sensors 250 that are coupled to the electronic controller 240. Some of the sensors 250 may detect suspension displacement and/or a position and/or motion of the work vehicle 200 and/or the chassis 215 including velocity, linear acceleration, angular acceleration, levelness of the chassis, rotation, etc. The work vehicle 200 can include additional sensors 250 to detect a liquid level in the tank 115, a movement of a volume of liquid in the tank 115, a position of the boom 105 (folded, unfolded, partially unfolded, height, angle, etc.), torque on an axle, signals from a transmission control module, signals from a powertrain control module, signals from hydrostatic drive controls, depression of a brake pedal, depression of an accelerator pedal, wind speed, wind direction, steering angle, etc.

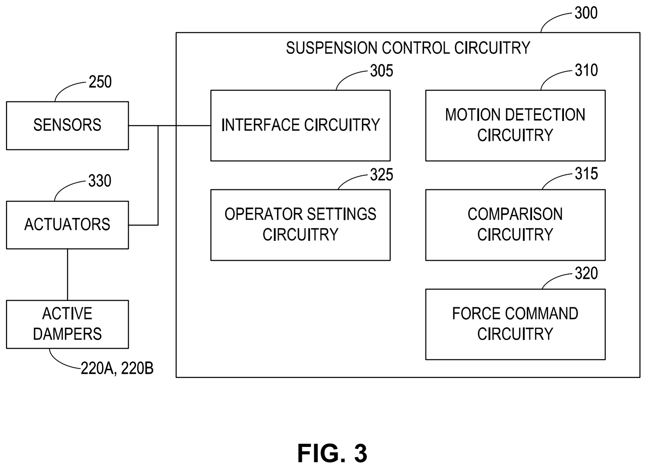

The active suspension control system 205 activates the first active damper 220A and the second active damper 220A to mitigate movement of the chassis 215 based on data gathered by and/or generated by one or more of the sensors 250. FIG. 3 is a block diagram of an example implementation of suspension control circuitry 300 of the active suspension control system 205 of FIG. 2. The suspension control circuitry 300 is used to implement active chassis suspension control of the agricultural sprayer 100 to maximize vehicle stability and minimize boom excitation. The suspension control circuitry 300 can be implemented via the active suspension control system 205 (e.g., at the electronic controller 240).

The suspension control circuitry 300 includes example interface circuitry 305, example motion detection circuitry 310, example comparison circuitry 315, example force command circuitry 320, and example operating settings circuitry 325.

The interface circuitry 305 obtains, retrieves, receives, and/or otherwise accesses data gathered by and/or generated by the sensors 250. For example, the interface circuitry 325 obtains data from the sensor 250 that measures displacement of the chassis 215. In some examples, the interface circuitry 325 obtains data related to movement of the work vehicle 200, the chassis 215, and/or the boom 105. In some examples, the interface circuitry 305 obtains other data disclosed herein.

The motion detection circuitry 310 identifies motion of the chassis 215. For example, the motion detection circuitry 310 identifies motion of the chassis 215 based on data from the sensors 250 about displacement of the chassis 215, acceleration of the chassis 215, a velocity of the agricultural sprayer 100, deployment or other position of the boom 105, sloshing of liquid in the tank 115, etc. The motion detection circuitry 310 detects motion of the chassis 215 at a location associated with the active suspension control system 205. Thus, for example, the motion detection circuitry 310 detects motion of the chassis 215 at one or more of the corners of the chassis 215. In some examples, the motion detection circuitry 310 detects motion of the chassis 215 at multiple locations (e.g., multiple corners) of the chassis 215. In some examples, the motion is indicative of an instability of the chassis 215, the work vehicle 200, and/or the boom 105.

The comparison circuitry 315 compares the motion to thresholds. For example, if and/or when the motion is velocity or a vehicle speed, the comparison circuitry 315 compares the measured speed to a threshold speed. If and/or when the motion is angular acceleration, the comparison circuitry 315 compares the measured angular acceleration to a threshold angular acceleration. In some examples, the results of the comparison(s) (e.g., where threshold values are exceed) are indicative of an instability of the chassis 215, the work vehicle 200, and/or the boom 105.

The force command circuitry 320 identifies a damping force for application by the first active damper 200A and the second active damper 220B based on one or more of: motion detected by the motion detection circuitry 310; a comparison made by the comparison circuitry; and/or an operator setting. In some examples, the force command circuitry 320 identifies the damping force based on multiple types of motion. For example, the force command circuitry 320 identifies a force to apply to one or more of the first active damper 200A or the second active damper 220B that is proportional to the motion. For example, the greater the motion, the greater the damping force to mitigate the effects of the motion. The damping force is to change a height of the location of the chassis 215 associated with the motion. In some examples, the height of the location of the chassis 215 is changed relative to the wheel 210. Effectively, the damping force is identified to smooth the motion and stabilize the chassis 215.

In some examples, the force command circuitry 320 identifies the damping force and/or adjusts an identified damping force based on an operator setting. Some operators may tolerate a more aggressive ride than other operators. For example, some operators may handle more juddering or rocking than other operators without experiencing fatigue. The operator setting can be based on operator preference and/or operator physiology. The operator settings is accessed or determined by the operating settings circuitry 325.

In some examples, the force command circuitry 320 identifies different damping forces for different locations of the chassis 215. Different areas of the chassis 215 may experience different motion, and different damping forces to counteract the motion is applied to the different locations. For example, the location of the chassis 215 near a pivot at which the boom 105 is deployed will experience different motion than a location distal to the pivot. In another example, a front of the chassis 215 experiences different motion than a rear of the chassis 215 during sudden deceleration. In some examples, the force command circuitry 320 identifies damping forces for different locations of the chassis 215 independently. In other words, force command circuitry 320, in some examples, identifies a damping force at a first corner or other location of the chassis 215 without regard to the damping force identifies for a second corner or other location of the chassis 215.

In some examples, the force command circuitry 320 does not identify a damping force when the agricultural sprayer 100 is moving at a low speed. For example, if and/or when the comparison circuitry 315 compares the speed of the agricultural sprayer 100, the work vehicle 200, and/or the chassis 215 to a threshold speed, and the speed does not exceed the threshold speed, the suspension control circuitry 300 identifies the agricultural sprayer 100 as moving slowly, and that there is no need to identify any damping forces. In some examples, the threshold speed is 1 mile per hour. Thus, in such examples, the force command circuitry 320 identifies damping forces for one or more areas of the chassis 215 when the speed of the agricultural sprayer 100, the work vehicle 200, and/or the chassis 215 exceeds the threshold speed.

The identified damping forces are included in a command signal that the suspension control circuitry 300 communicates via the interface circuitry 305 to one or more actuators 330. The actuators effect the command signal by causing one or more of the first active damper 200A and the second active damper 220B to apply the identified damping force to the associated location of the chassis 215. In examples with hydraulic dampers, the actuators 330 may change a position of a valve in one or more of the active dampers 220A, 220B to control a rate of fluid flowing through a piston in the active damper 220A, 220B. In some examples, the first active damper 200A and the second active damper 220B are orientated such that one extends while the other compresses. In such examples, the damping force identified by the force command circuitry 320 is to extend one of the active dampers 220A, 220B while compressing the other of the active dampers 220B, 220A. In other words, the actuators 330 cause extension of one of the active dampers 220A, 200B and compression of the other one of the active dampers 220B, 220A based on the force command.

FIG. 3 is a block diagram of an example implementation of the suspension control circuitry 300 to implement active chassis suspension control. The suspension control circuitry 300 of FIG. 3 may be instantiated (e.g., creating an instance of, bring into being for any length of time, materialize, implement, etc.) by programmable circuitry. For example, programmable circuitry may be implemented by a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the suspension control circuitry 300 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) (e.g., another form of programmable circuitry) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

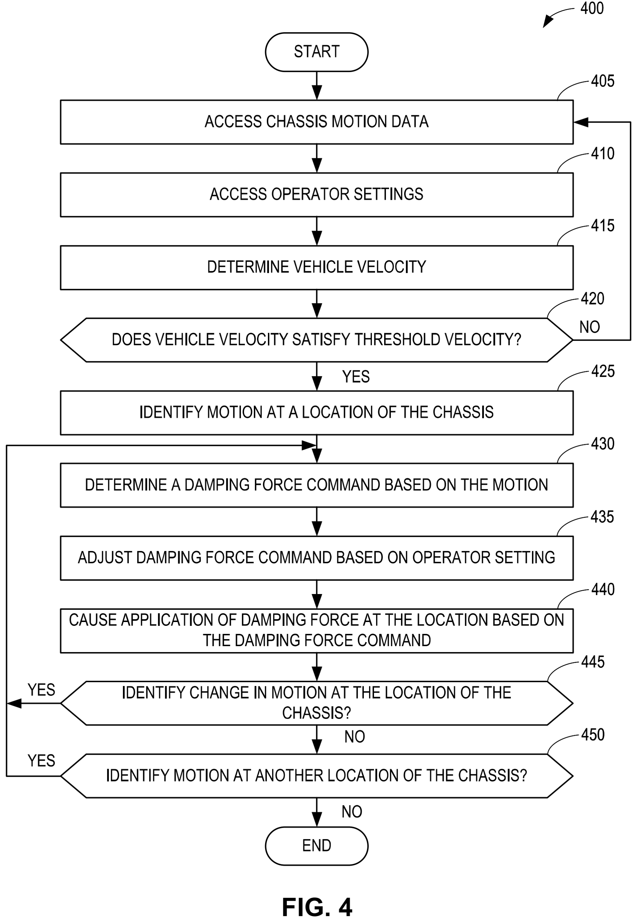

In some examples, the suspension control circuitry 300 is instantiated by programmable circuitry executing suspension control instructions and/or configured to perform operations such as those represented by the flowchart(s) of FIG. 4.

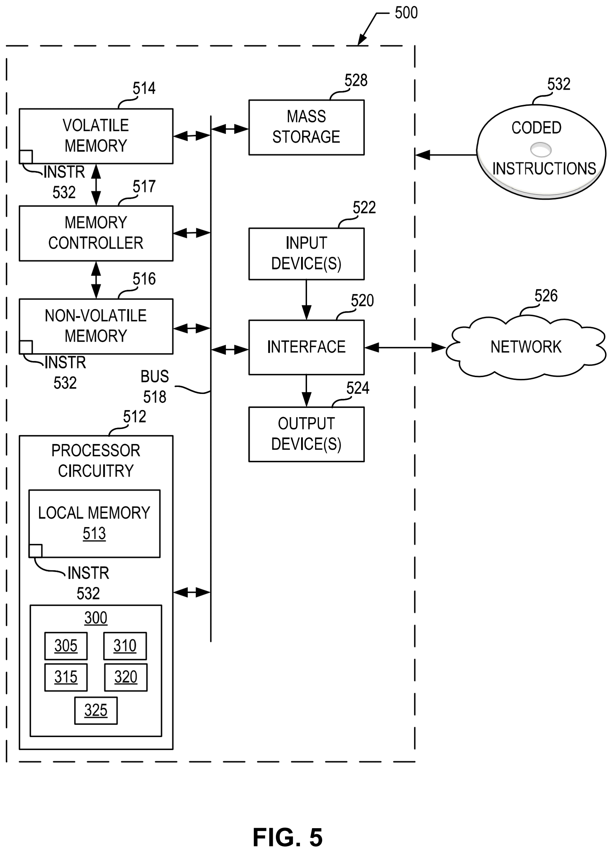

In some examples, the suspension control circuitry 300 includes means for controlling suspension of a vehicle. In some examples, the suspension control circuitry 300 may be instantiated by programmable circuitry such as the example programmable circuitry 512 of FIG. 5. For instance, the suspension control circuitry 300 may be instantiated by a microprocessor executing machine executable instructions such as those implemented by the operations of FIG. 4. In some examples, the suspension control circuitry 300 may be instantiated by hardware logic circuitry, which may be implemented by an ASIC, XPU, or FPGA circuitry configured and/or structured to perform operations corresponding to the machine-readable instructions. Additionally or alternatively, the suspension control circuitry 300 may be instantiated by any other combination of hardware, software, and/or firmware. For example, the suspension control circuitry 300 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the suspension control circuitry 300 is illustrated in FIG. 3, one or more of the elements, processes, and/or devices illustrated in FIG. 3 may be combined, divided, re-arranged, omitted, eliminated, and/or implemented in any other way. Further, the example interface circuitry 305, the example motion detection circuitry 310, the example comparison circuitry 315, the example force command circuitry 320, the example operating settings circuitry 325, and/or, more generally, the example suspension control circuitry 300 of FIG. 3, may be implemented by hardware alone or by hardware in combination with software and/or firmware. Thus, for example, any of the example interface circuitry 305, the example motion detection circuitry 310, the example comparison circuitry 315, the example force command circuitry 320, the example operating settings circuitry 325, and/or, more generally, the example suspension control circuitry 300, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing units (VPUs), and/or field programmable logic device(s) (FPLD(s)) such as FPGAs in combination with machine readable instructions (e.g., firmware or software). Further still, the example suspension control circuitry 300 of FIG. 3 may include one or more elements, processes, and/or devices in addition to, or instead of, those illustrated in FIG. 3, and/or may include more than one of any or all of the illustrated elements, processes and devices.

Flowchart(s) representative of example machine-readable instructions, which may be executed by programmable circuitry to implement and/or instantiate the suspension control circuitry 300 of FIG. 3 and/or representative of example operations which may be performed by programmable circuitry to implement and/or instantiate the suspension control circuitry 300 of FIG. 3, are shown in FIG. 4. The machine-readable instructions may be one or more executable programs or portion(s) of one or more executable programs for execution by programmable circuitry such as the programmable circuitry 512 shown in the example processor platform 500 discussed below in connection with FIG. 5 and/or may be one or more function(s) or portion(s) of functions to be performed by the example programmable circuitry (e.g., an FPGA). In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIG. 4, many other methods of implementing the example suspension control circuitry 300 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). As used herein, programmable circuitry includes any type(s) of circuitry that may be programmed to perform a desired function such as, for example, a CPU, a GPU, a VPU, and/or an FPGA. The programmable circuitry may include one or more CPUs, one or more GPUs, one or more VPUs, and/or one or more FPGAs located in the same package (e.g., the same integrated circuit (IC) package or in two or more separate housings), one or more CPUs, GPUs, VPUs, and/or one or more FPGAs in a single machine, multiple CPUs, GPUs, VPUs, and/or FPGAs distributed across multiple servers of a server rack, and/or multiple CPUs, GPUs, VPUs, and/or FPGAs distributed across one or more server racks. Additionally or alternatively, programmable circuitry may include a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc., and/or any combination(s) thereof in any of the contexts explained above.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C-sharp, Perl, Python, JavaScript, HyperText Markup Language (HTML), Structured Query Language (SQL), Swift, etc.

As mentioned above, the example operations of FIG. 4 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

FIG. 4 is a flowchart representative of example machine-readable instructions and/or example operations 400 that may be executed, instantiated, and/or performed by programmable circuitry for active suspension control of vehicles such as agricultural sprayers. The example machine-readable instructions and/or the example operations 400 include the interface circuitry 205 of the suspension control circuitry 300 accessing chassis motion data (block 405). The operator settings circuitry 325 accesses an operator setting that is indicative of operator tolerance for how bumpy or smooth the operator would like the agricultural sprayer 100 to operate (block 410).

The motion detection circuitry 310 determines vehicle velocity of the agricultural sprayer 100 (block 415). The comparison circuitry 315 determines if the vehicle velocity satisfies a threshold velocity (block 420). If and/or when the vehicle velocity does not satisfy the threshold velocity (block 420: NO), the suspension control circuitry 300 determines that the vehicle is moving too slowly to apply active suspension control, and the process 400 continues with the interface circuitry 305 access chassis motion data (block 405).

If and/or when the vehicle velocity does satisfy the threshold velocity (block 420: YES), the motion detection circuitry 310 identifies motion at a location of the chassis 215 (block 425). The force command circuitry 320 determines a damping force command based on the motion (block 430). The force command circuitry 320 also determines if the damping force is adjusted based on an operator setting gathered or determined by the operator settings circuitry 325 (block 435).

The suspension control circuitry 300 effects the force command by causing (e.g., via the actuators 330) application of the damping force at the location based on the damping force command (block 440). The motion detection circuitry 310 determines if there is a change in motion at the location of the chassis 215 (block 445). If and/or when there is a change in motion at the location of the chassis (block 445: YES), the process 400 continues with the force command circuitry 320 determining a damping force command based on the motion (block 430).

If and/or when motion detection circuitry 310 determines that there is not a change in motion at the location of the chassis (block 445: NO), the process 400 continues with the motion detection circuitry 310 determining if there is motion identified at another location of the chassis 215 (block 450). If and/or when there is motion identified at another location of the chassis (block 450: YES), the process 400 continues with the force command circuitry 320 determining a damping force command based on the motion (block 430). If and/or when the motion detection circuitry 310 determines that there is no motion identified at another location of the chassis (block 450: NO), the process 400 ends. As noted above, the order of the blocks may be rearranged. Thus, in some examples, the motion detection circuitry 310 identifies motion at different locations of the chassis 215 independently, simultaneously, partially simultaneously, subsequently, etc.

FIG. 5 is a block diagram of an example programmable circuitry platform 500 structured to execute and/or instantiate the example machine-readable instructions and/or the example operations of FIG. 4 to implement the suspension control circuitry 300 of FIG. 3. The programmable circuitry platform 500 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing and/or electronic device.

The programmable circuitry platform 500 of the illustrated example includes programmable circuitry 512. The programmable circuitry 512 of the illustrated example is hardware. For example, the programmable circuitry 512 can be implemented by one or more integrated circuits, logic circuits, FPGAs, microprocessors, CPUs, GPUs, VPUs, DSPs, and/or microcontrollers from any desired family or manufacturer. The programmable circuitry 512 may be implemented by one or more semiconductor based (e.g., silicon based) devices. In this example, the programmable circuitry 512 implements the suspension control circuitry 300, the interface circuitry 305, the motion detection circuitry 310, the comparison circuitry 315, the force command circuitry 320, and the operating settings circuitry 325.

The programmable circuitry 512 of the illustrated example includes a local memory 513 (e.g., a cache, registers, etc.). The programmable circuitry 512 of the illustrated example is in communication with main memory 514, 516, which includes a volatile memory 514 and a non-volatile memory 516, by a bus 518. The volatile memory 514 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 516 may be implemented by flash memory and/or any other desired type of memory device. Access to the main memory 514, 516 of the illustrated example is controlled by a memory controller 517. In some examples, the memory controller 517 may be implemented by one or more integrated circuits, logic circuits, microcontrollers from any desired family or manufacturer, or any other type of circuitry to manage the flow of data going to and from the main memory 514, 516.

The programmable circuitry platform 500 of the illustrated example also includes interface circuitry 520. The interface circuitry 520 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 522 are connected to the interface circuitry 520. The input device(s) 522 permit(s) a user (e.g., a human user, a machine user, etc.) to enter data and/or commands into the programmable circuitry 512. The input device(s) 522 can be implemented by, for example, an audio sensor, a microphone, a camera (still or video), a keyboard, a button, a mouse, a touchscreen, a trackpad, a trackball, an isopoint device, and/or a voice recognition system.

One or more output devices 524 are also connected to the interface circuitry 520 of the illustrated example. The output device(s) 524 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 520 of the illustrated example, thus, typically includes a graphics driver card, a graphics driver chip, and/or graphics processor circuitry such as a GPU.

The interface circuitry 520 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 526. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 500 of the illustrated example also includes one or more mass storage discs or devices 528 to store firmware, software, and/or data. Examples of such mass storage discs or devices 528 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 532, which may be implemented by the machine-readable instructions of FIG. 4, may be stored in the mass storage device 528, in the volatile memory 514, in the non-volatile memory 516, and/or on at least one non-transitory computer readable storage medium such as a CD or DVD which may be removable.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is openended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real-world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that actively control suspensions in vehicles such as agricultural sprayers. Disclosed systems, apparatus, articles of manufacture, and methods improve the operation of such vehicles and implements. Examples disclosed intelligently change the damping force at different areas of a vehicle chassis based on vehicle operating conditions, environmental conditions, and/or operator preference. Examples disclosed herein increase vehicle and implement stability and operation and operator comfort.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

Embodiments of the invention can be described with reference to the following numbered clauses, with preferred features laid out in dependent clauses:
1. An agricultural sprayer comprising:
   a chassis;
   a wheel coupled to the chassis;
   an active damper at a location of the chassis;
   machine-readable instructions; and
   programmable circuitry to execute the machine-readable instructions to:
      identify motion of the chassis at the location;
      determine a damping force command for the active damper based on the motion; and
      cause the active damper to implement a damping force at the location of the chassis based on the damping force command, the damping force to alter dynamics of the chassis at the location.
2. The agricultural sprayer of clause 1, wherein the wheel is a first wheel, the active damper is a first active damper, the location is a first location, the motion is a first motion, the damping force command is a first damping force command, the damping force is a first damping force, and wherein the agricultural sprayer includes:
   a second wheel coupled to the chassis; and
   a second active damper at a second location of the chassis;
   wherein the programmable circuitry is to execute the machine-readable instructions to:
      identify second motion of the chassis at the second location;
      determine a second damping force command for the second active damper based on the second motion; and
      cause the second active damper to implement a second damping force at the second location of the chassis based on the second damping force command, the second damping force to alter dynamics of the chassis at the second location, the second damping force different than the first damping force.
3. The agricultural sprayer of clause 2, wherein the programmable circuitry is to execute the machine-readable instructions to cause the first active damper to implement the first damping force and the second active damper to implement the second damping force independently.
4. The agricultural sprayer of clause 2 or clause 3, wherein the first active damper and the second active damper include hydraulic dampers, the first force is proportional to the first motion and the second force is proportional to the second motion.
5. The agricultural sprayer of any one of clauses 2 to 4, wherein the damping force command is to compress the first active damper and to extend the second active damper.
6. The agricultural sprayer of any preceding clause, wherein the programmable circuitry is to execute the machine-readable instructions to:
   detect a vehicle speed;
   compare the vehicle speed to a threshold speed; and
   determine the damping force when the vehicle speed satisfies the threshold speed.
7. The agricultural sprayer of any preceding clause, wherein the programmable circuitry is to execute the machine-readable instructions to:
   identify an operator comfort setting; and
   determine the damping force based on the operator comfort setting.
8. The agricultural sprayer of any preceding clause, further including a boom, wherein the programmable circuitry is to execute the machine-readable instructions to:
   identify a position of the boom; and
   determine the damping force based on the position of the boom.
9. The agricultural sprayer of any preceding clause, further including a tank with a volume of liquid, wherein the programmable circuitry is to execute the machine-readable instructions to:
   identify sloshing of the volume of the liquid; and
   determine the damping force based on the sloshing.
10. A non-transitory machine-readable storage medium comprising instructions that, when executed, cause at least one processor circuit to:
   access data related to motion of a chassis of an agricultural sprayer;
   determine a damping force command for an active damper based on motion at a location of the chassis; and
   cause the active damper to implement a damping force at the location of the chassis based on the damping force command, the damping force to alter dynamics of the chassis at the location.
11. The machine-readable medium of clause 10, wherein the wheel is a first wheel, the active damper is a first active damper, the location is a first location, the motion is a first motion, the damping force command is a first damping force command, the damping force is a first damping force, and wherein the instructions, when executed, cause the at least one processor circuit to:
   identify second motion of the chassis at a second location;
   determine a second damping force command for a second active damper based on the second motion; and
   cause the second active damper to implement a second damping force at the second location of the chassis based on the second damping force command, the second damping force to alter dynamics of the chassis at the second location, the second damping force different than the first damping force, the first damping force and the second damping force implemented independently.
12. The machine-readable medium of clause 10 or clause 11, wherein the active damper includes hydraulic dampers, the force being proportional to the motion.
13. The machine-readable medium of clause 12, wherein the instructions, when executed, cause the at least one processor circuit to actuate a valve in the active damper in response to the damping force command.
14. The machine-readable medium of any one of clauses 10 to 13, wherein the instructions, when executed, cause the at least one processor circuit to:
   compare a vehicle speed to a threshold speed; and
   determine the damping force when the vehicle speed satisfies the threshold speed.
15. The machine-readable medium of any one of clauses 10 to 14, wherein the instructions, when executed, cause the at least one processor circuit to determine the damping force based on an operator comfort setting.
16. The machine-readable medium of any one of clauses 10 to 15, wherein the instructions, when executed, cause the at least one processor circuit to determine the damping force based on a position of a boom.
17. The machine-readable medium of any one of clauses 10 to 16, wherein the instructions, when executed, cause the at least one processor circuit to determine the damping force based on a sloshing of a volume of liquid in a tank.
18. The machine-readable medium of any one of clauses 10 to 17, wherein the active damper includes a first active damper and a second active damper, and the instructions, when executed, cause the at least one processor circuit to cause compression the first active damper and to cause extension of the second active damper based on the first damping force command.
19. A method to stabilize a chassis of an agricultural sprayer, the method comprising:
   identifying motion of the chassis at a location;
   determining a damping force command for an active damper based on the motion; and
   causing the active damper to implement a damping force at the location of the chassis based on the damping force command, the damping force to alter dynamics of the chassis at the location.
20. The method of clause 19, wherein the wheel is a first wheel, the active damper is a first active damper, the location is a first location, the motion is a first motion, the damping force command is a first damping force command, the damping force is a first damping force, and the method includes:
   identifying second motion of the chassis at a second location;
   determining a second damping force command for a second active damper based on the second motion; and
   causing the second active damper to implement a second damping force at the second location of the chassis based on the second damping force command, the second damping force to alter dynamics of the chassis at the second location, the second damping force different than the first damping force, the first damping force and the second damping force implemented independently.

## Claims

1. An agricultural sprayer (100) comprising:
a chassis (215);
a wheel (210) coupled to the chassis;
an active damper (220A, 200B) at a location of the chassis;
machine-readable instructions (400, 532); and
programmable circuitry (300, 512) to execute the machine-readable instructions to:
identify motion of the chassis at the location;
determine a damping force command for the active damper based on the motion; and
cause the active damper to implement a damping force at the location of the chassis based on the damping force command, the damping force to alter dynamics of the chassis at the location.

2. The agricultural sprayer of claim 1, wherein the wheel is a first wheel, the active damper is a first active damper, the location is a first location, the motion is a first motion, the damping force command is a first damping force command, the damping force is a first damping force, and wherein the agricultural sprayer includes:
a second wheel (210) coupled to the chassis; and
a second active damper (220A, 220B) at a second location of the chassis;
wherein the programmable circuitry is to execute the machine-readable instructions to:
identify second motion of the chassis at the second location;
determine a second damping force command for the second active damper based on the second motion; and
cause the second active damper to implement a second damping force at the second location of the chassis based on the second damping force command, the second damping force to alter dynamics of the chassis at the second location, the second damping force different than the first damping force.

3. The agricultural sprayer of claim 2, wherein the programmable circuitry is to execute the machine-readable instructions to cause the first active damper to implement the first damping force and the second active damper to implement the second damping force independently.

4. The agricultural sprayer of any of claims 2 or 3, wherein the first active damper and the second active damper include hydraulic dampers, the first force is proportional to the first motion and the second force is proportional to the second motion.

5. The agricultural sprayer of any of claims 2 to 4, wherein the damping force command is to compress the first active damper and to extend the second active damper.

6. The agricultural sprayer of any of claims 1 to 5, wherein the programmable circuitry is to execute the machine-readable instructions to:
detect a vehicle speed;
compare the vehicle speed to a threshold speed; and
determine the damping force when the vehicle speed satisfies the threshold speed.

7. The agricultural sprayer of any of claims 1 to 6, wherein the programmable circuitry is to execute the machine-readable instructions to:
identify an operator comfort setting; and
determine the damping force based on the operator comfort setting.

8. The agricultural sprayer of any of claims 1 to 7, further including a boom (105), wherein the programmable circuitry is to execute the machine-readable instructions to:
identify a position of the boom; and
determine the damping force based on the position of the boom.

9. The agricultural sprayer of any of claims 1 to 8, further including a tank (115) with a volume of liquid, wherein the programmable circuitry is to execute the machine-readable instructions to:
identify sloshing of the volume of the liquid; and
determine the damping force based on the sloshing.

10. A non-transitory machine-readable storage medium (500) comprising instructions (400, 5632) that, when executed, cause at least one processor circuit (300, 512) to:
access data related to motion of a chassis (215) of an agricultural sprayer (100);
determine a damping force command for an active damper (220A, 220B) based on motion at a location of the chassis; and
cause the active damper to implement a damping force at the location of the chassis based on the damping force command, the damping force to alter dynamics of the chassis at the location.

11. The machine-readable medium of claim 10, wherein the wheel is a first wheel, the active damper is a first active damper, the location is a first location, the motion is a first motion, the damping force command is a first damping force command, the damping force is a first damping force, and wherein the instructions, when executed, cause the at least one processor circuit to:
identify second motion of the chassis at a second location;
determine a second damping force command for a second active damper (220A, 220B) based on the second motion; and
cause the second active damper to implement a second damping force at the second location of the chassis based on the second damping force command, the second damping force to alter dynamics of the chassis at the second location, the second damping force different than the first damping force, the first damping force and the second damping force implemented independently.

12. The machine-readable medium of any of claims 10 or 11, wherein the instructions, when executed, cause the at least one processor circuit to actuate a valve in the active damper in response to the damping force command.

13. The machine-readable medium of any of claims 10 to 12, wherein the active damper includes a first active damper and a second active damper, and the instructions, when executed, cause the at least one processor circuit to cause compression the first active damper and to cause extension of the second active damper based on the first damping force command.

14. A method to stabilize a chassis (215) of an agricultural sprayer (100), the method comprising:
identifying motion of the chassis at a location;
determining a damping force command for an active damper (220A, 220B) based on the motion; and
causing the active damper to implement a damping force at the location of the chassis based on the damping force command, the damping force to alter dynamics of the chassis at the location.

15. The method of claim 14, wherein the active damper is a first active damper, the location is a first location, the motion is a first motion, the damping force command is a first damping force command, the damping force is a first damping force, and the method includes:
identifying second motion of the chassis at a second location;
determining a second damping force command for a second active damper based on the second motion; and
causing the second active damper to implement a second damping force at the second location of the chassis based on the second damping force command, the second damping force to alter dynamics of the chassis at the second location, the second damping force different than the first damping force, the first damping force and the second damping force implemented independently.
